# EUROPEAN PATENT APPLICATION

(11) **EP 3 572 328 A1**
(43) Date of publication of application: **27.11.2019**
(21) Application number: 19171021.9
(22) Date of filing: 25.04.2019
(51) Int. Cl.: B64D 13/06, B64D 13/08

(54) **AIRCRAFT ENVIRONMENTAL CONTROL SYSTEM**

(30) Priority: 24.05.2018 GR 20180100231; 24.05.2018 GR 20180100230
(71) Applicant: Rolls-Royce plc, London SW1E 6AT (GB)
(72) Inventor: Pachidis, Vasileios, Derby, Derbyshire DE24 8BJ (GB); Anselmi, Eduardo, Derby, Derbyshire DE24 8BJ (GB); Ippedico, Salvatore, Derby, Derbyshire DE24 8BJ (GB)
(74) Representative: Rolls-Royce plc

(57) **Abstract**

An aircraft environmental control system (20) comprises a first heat exchanger (24) configured to exchange heat between air provided by a pressurised air source (13) and a working fluid of a closed cycle refrigeration system, and an air turbine (32) configured to receive cooled air from the first heat exchanger (24). The closed cycle refrigeration system comprises a closed cycle refrigeration system compressor (35) driven by the air turbine (32), a closed cycle refrigeration system expander (36), and a second heat exchanger (33) configured to exchange heat between working fluid of the closed cycle refrigeration system and air downstream of the air turbine (32). The air turbine drives a further load (39).

## Description

The present disclosure concerns an aircraft environmental control system, and an aircraft including an environmental control system.

Aircraft include environmental control systems (ECS), which provide pressurised, climate controlled air for the crew and passengers. In a conventional ECS in a gas turbine engine powered aircraft, this air is provided from a compressor bleed from the engines. This bleed air is at a high enough pressure and flow rate to provide passenger air requirements, but is also generally also at a high temperature. Consequently, conventional ECS use an air cycle machine comprising a bleed air driven turbine, compressor and heat exchanger for cooling the air and regulating its pressure.

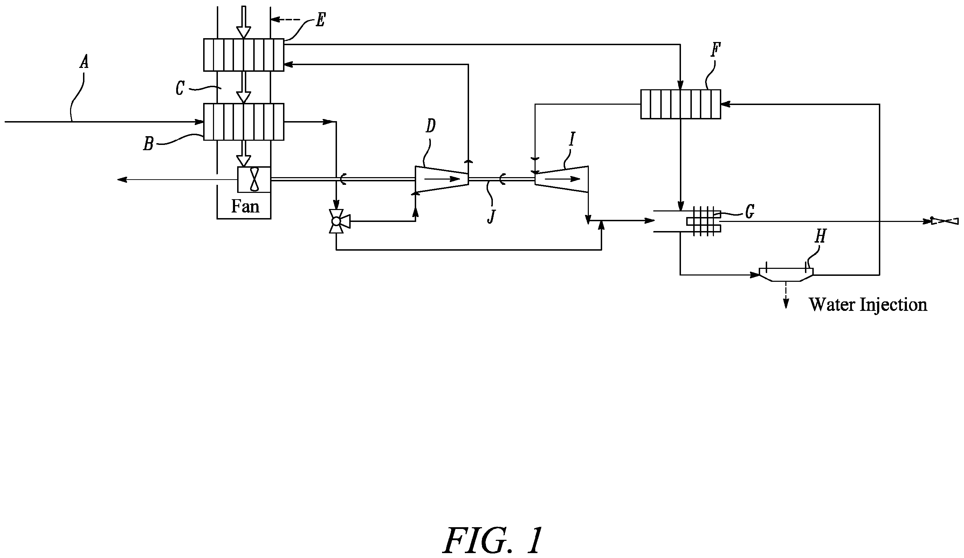

Figure 1 shows a prior environmental control system. The system comprises an input A from a compressed air source such as a compressor of a gas turbine engine. The compressed air first flows through a primary heat exchanger B, which reduces the temperature of the air by exchanging heat with ambient air through a ram air duct C. The cooled air is transferred to a compressor D, which compresses and heats the air. This air is then cooled once more by a main heat exchanger E, which again exchanges heat with ambient air. The cooled air is then cooled once more by a re-heater heat exchanger F, so that humidity can be removed by a condenser G and water separator H, before being reheated by the reheater F, and passed to a turbine I, which depressurises and cools the air. The turbine I is coupled to the compressor D by a shaft J, which drives the compressor D. The cooled, depressurised air is then output to the cabin.

Alternatively, separate mechanically or electrically driven compressors may be utilised. In either case, such a system is relatively inefficient due to the need to reject heat to an external air stream, which leads to loss of energy, and ram air drag from the primary and main heat exchangers. This inefficiency leads to increased aircraft level fuel burn, and can typically account for several percent of the overall fuel usage of an aircraft.

Consequently, there is a need to provide for a more efficient aircraft ECS.

According to a first aspect there is provided an aircraft environmental control system comprising:
a first heat exchanger configured to exchange heat between air provided by a pressurised air source, and a working fluid of a closed cycle refrigeration system;
an air turbine configured to receive cooled air from the first heat exchanger;
wherein the closed cycle refrigeration system comprises:
   a closed cycle refrigeration system compressor driven by the air turbine, a closed cycle refrigeration system expander, and a second heat exchanger configured to exchange heat between working fluid of the closed cycle refrigeration system and a coolant; and wherein
   the air turbine drives a further load.

Advantageously, the system increases the efficiency of the environmental control system, by reducing the amount of heat rejected by the system, while obtaining the required pressure, flow and temperature requirements for delivery to the aircraft. The increased efficiency is used to power a turbine, which drives a further load. The reduced rejected heat both provides additional useful work (via the air turbine and further load), and also reduces aircraft drag, since the primary and / or main heat exchangers of a conventional system can be either omitted or reduced in size, thereby reducing ram drag. The air cycle machine compressor and turbine of a conventional system can also optionally be deleted, thereby reducing overall system mass.

The environmental control system may further comprise an air cycle machine comprising an air cycle machine compressor coupled to an air cycle machine turbine by an air cycle machine shaft. The air cycle machine compressor may be configured to receive bleed air from the pressurised air source, and may be configured to deliver air to the first heat exchanger. The air cycle machine turbine may be configured to receive cooled bleed air downstream of the first heat exchanger, and may be configured to deliver bleed air to the air turbine.

The pressurised air source may comprise one or more of a main gas turbine engine core compressor, an electrically driven compressor, and a gas turbine engine shaft driven auxiliary compressor.

The working fluid of the closed cycle refrigeration system may comprise carbon dioxide. The closed cycle refrigeration system may be configured such that the working fluid is heated to a critical or supercritical state by the first heat exchanger. Advantageously, large amounts of heat can be absorbed by the working fluid of the closed cycle refrigeration system, thereby resulting in reduced temperature pressurised air, while only increasing the temperature of the closed refrigeration cycle working fluid by a small amount. Furthermore, the closed refrigeration cycle working fluid has a high density near the critical point, thereby reducing the worked required by the closed refrigeration cycle compressor to increase its pressure. Consequently, increased efficiency results.

The coolant may comprise one of air provided from a ram air duct, and aircraft fuel.

The second heat exchanger may be configured to exchange heat between working fluid of the closed cycle refrigeration system and air downstream of the air turbine.

The closed cycle refrigeration system may comprise a third heat exchanger provided downstream in working fluid flow of the second heat exchanger, and configured to exchange heat between the closed cycle refrigeration system working fluid and a heat sink working fluid. Advantageously, excess heat can be removed from the system.

The heat sink working fluid may comprise one of air provided from a ram air duct, and aircraft fuel. Advantageously, where the heat sink working fluid comprises aircraft fuel, excess heat is returned to the engine, and is thereby used to provide further useful work, thereby increasing overall thermodynamic efficiency of the system. On the other hand, where the heat sink working fluid is air, a smaller heat exchanger may be required in view of the larger specific heat capacity of the closed cycle refrigeration cycle working fluid, and the reduced rejected heat, thereby resulting in reduced ram drag, and so increased overall aircraft efficiency.

The further load driven by the air turbine may comprise an electrical generator. Advantageously, additional work can be extracted from the cycle in the form of electrical power, which can be used to power aircraft systems, thereby increasing overall aircraft efficiency.

The closed cycle refrigeration system compressor may be provided downstream in working fluid flow of the first heat exchanger, the second heat exchanger may be provided downstream of the closed cycle refrigeration compressor, the expander may be provided downstream in working fluid flow of the second heat exchanger, and the first heat exchanger may be provided downstream in working fluid flow of the expander to form a closed cycle.

The expander may comprise one of an expansion valve and a closed cycle refrigeration turbine.

Where the expander comprises a turbine, the closed cycle refrigeration turbine may be configured to drive the closed cycle refrigeration cycle compressor. Consequently, again the closed cycle refrigeration turbine reduces the work required to power the closed cycle refrigeration compressor.

The environmental control system may comprise a bypass passage configured to bypass air from an output of the air cycle machine compressor to an input of a heater configured to heat air within the air turbine. An output of the heater may be coupled to an input of the air cycle machine compressor by a return line. Advantageously, hot air can be provided to the air turbine heater in the event that the system is operating at low temperatures, to prevent ice formation in the air turbine.

According to a second aspect, there is provided an aircraft comprising:
a gas turbine engine and an environmental control system in accordance with the first aspect, the gas turbine engine being configured to provide a source of compressed air to the environmental control system.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a schematic drawing of a prior environmental control system for an aircraft;
**Figure 2** is a plan view of an aircraft including an environmental control system;
**Figure 3** is a schematic side view of a gas turbine engine of the aircraft of figure 2;
**Figure 4** is a schematic side view of first alternative gas turbine engine of the aircraft of figure 2;
**Figure 5** is a schematic side view of second alternative gas turbine engine of the aircraft of figure 2;
**Figure 6** is a schematic drawing of an environmental control system of the aircraft of figure 2;
**Figure 7** is a schematic drawing of an alternative environmental control system of the aircraft of figure 2; and
**Figure 8** is a schematic drawing of a further alternative environmental control system of the aircraft of figure 2.

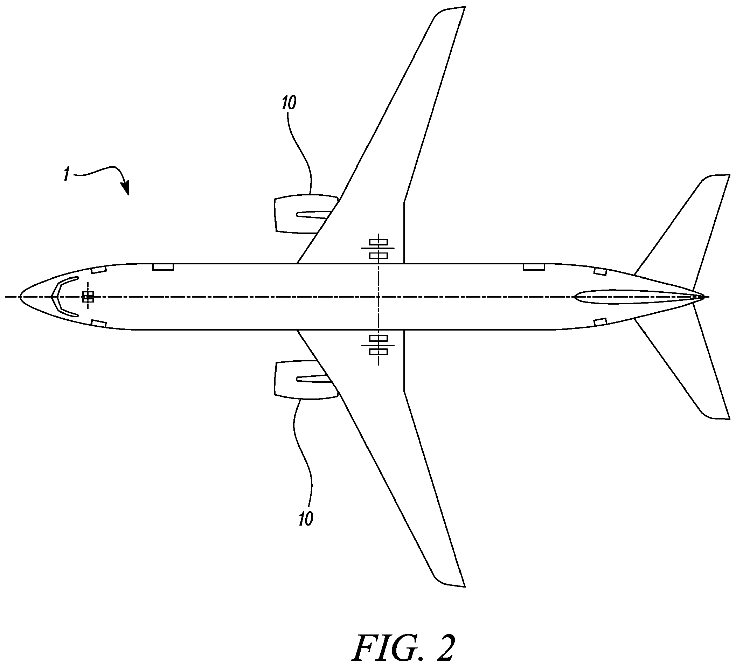

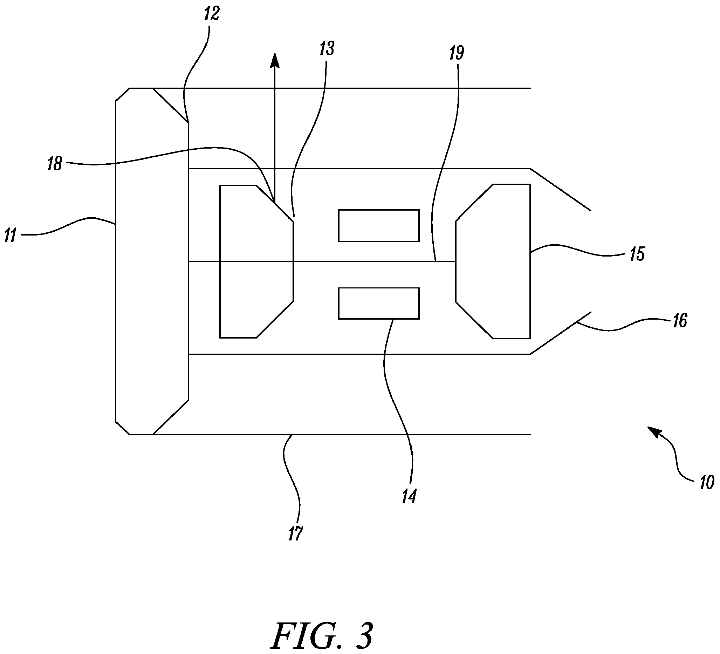

With reference to Figure 2, an aircraft 1 in the form of a passenger aircraft is shown. The aircraft 1 is powered by a pair of gas turbine engines 10, suitable examples of which are shown schematically in figures 3, 4 and 5. The gas turbine engine of figure 3 is generally indicated at 10 and comprises, in axial flow series, an air intake 11, a propulsive fan 12, a compressor 13, combustion equipment 14, a turbine 15, and an exhaust nozzle 16. A nacelle 17 generally surrounds the engine 10 and defines the intake 11.

The gas turbine engine 10 works in the conventional manner so that air entering the intake 11 is accelerated by the fan 12 to produce two air flows: a first air flow into the compressor 13 and a second air flow which passes through the nacelle 17 to provide propulsive thrust. The compressor 13 compresses the air flow directed into it before delivering that air to the combustion equipment 14.

In the combustion equipment 14 the air flow is mixed with fuel and the mixture combusted. The resultant hot combustion products then expand through, and thereby drive the turbine 15 before being exhausted through the nozzle 16 to provide additional propulsive thrust. The turbine 15 drives the compressor 13 and the fan 12, by an interconnecting shaft.

The compressor 13 comprises an environmental control system bleed port 18 configured to provide pressurised bleed air to an environmental control system (ECS) 20.

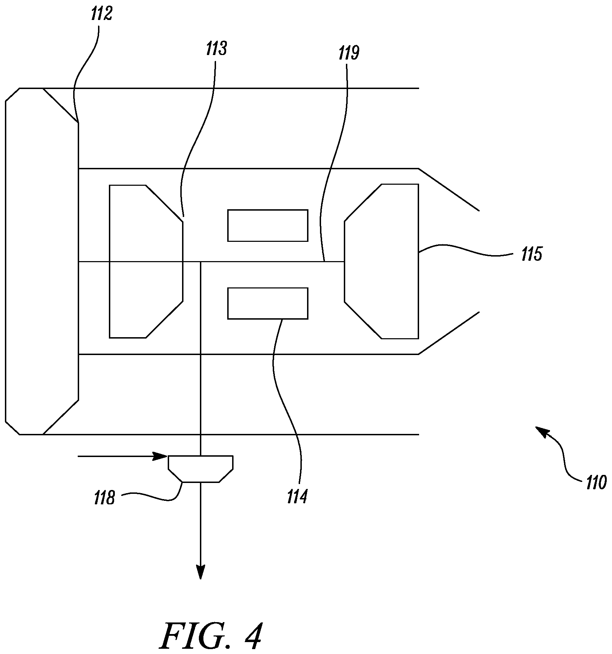

A first alternative gas turbine engine 110 is shown in figure 4. The engine 110 is similar to the engine 10, and comprises a fan 112, main engine core compressor 113, combustor 114 and turbine 115. The compressor 113 and turbine 115 are interconnected by a main engine shaft 119. However, instead of a bleed port, the gas turbine engine 110 comprises an engine shaft driven auxiliary compressor 118. The auxiliary compressor 118 is configured to ingest air, and compress it to provide a source of pressurised air to an environmental control system (ECS) 20.

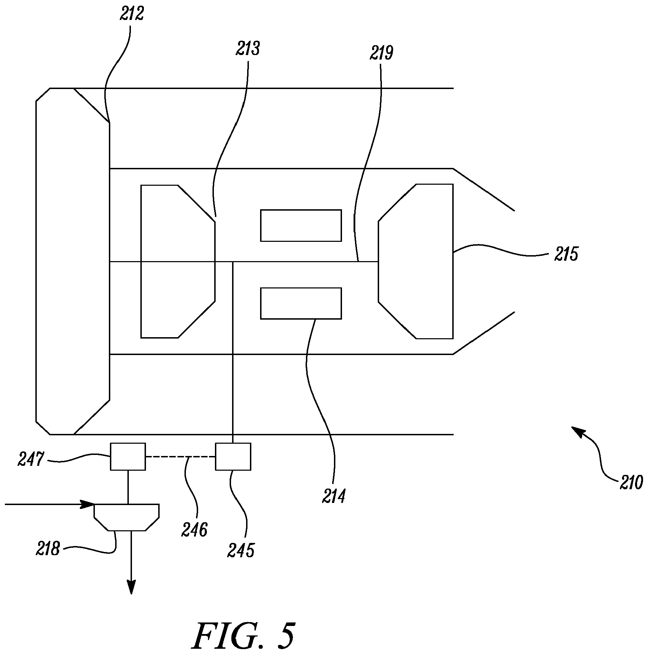

Similarly, a second alternative gas turbine engine 210 is shown in figure 5. The engine 210 is similar to the engine 10, and comprises a fan 212, main engine core compressor 213, combustor 214 and turbine 215. The compressor 213 and turbine 215 are interconnected by a main engine shaft 219. However, instead of a bleed port, the gas turbine engine 110 comprises an engine shaft driven electrical generator 245. The electrical generator 245 is coupled to an electric motor 247 via an electrical interconnector 246. The motor 247 in turn drives an auxiliary compressor 218. The auxiliary compressor 218 is again configured to ingest air, and compress it to provide a source of pressurised air to an environmental control system (ECS) 20.

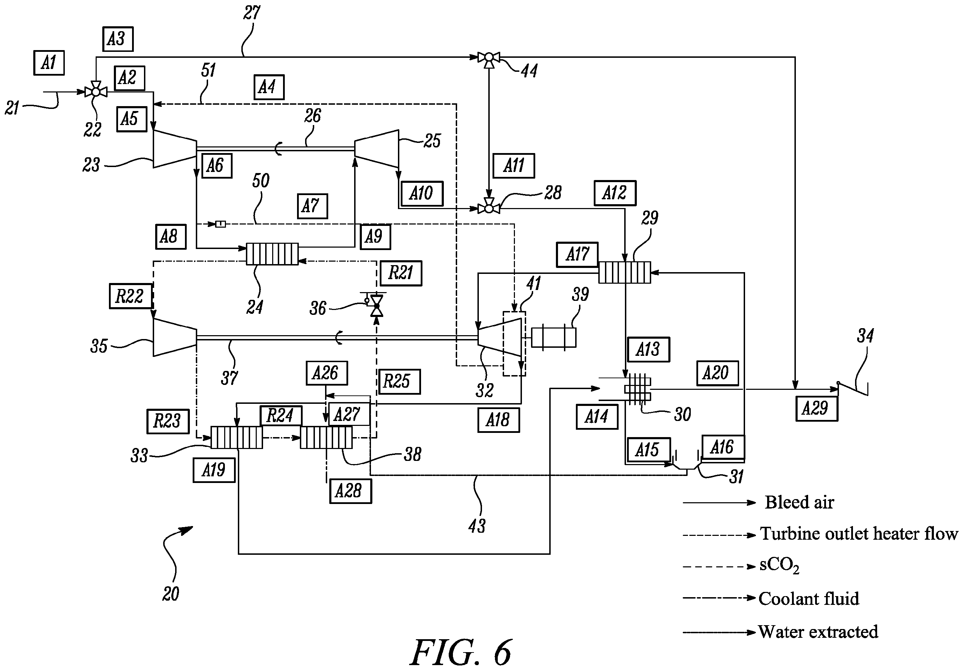

A schematic drawing of a first environmental control system 20 is shown in figure 6. The system comprises an air inlet 21, which is configured to receive air from the bleed port 18 of the gas turbine engine 10 or other pressurised air source. The air inlet 21 communicates with a temperature control valve in the form of a two way switching valve 22, which is configured to provide air to an air conditioning system downstream, and / or provide air to a bypass line 27. The temperature control valve 22 is controlled by an electronic controller (not shown) in accordance with a schedule.

Downstream in ECS flow of the valve 22 is an air cycle machine in the form of an air conditioning unit. The air conditioning unit comprises an air compressor 23, which is configured to compress bleed air downstream of the valve 22 to increase its pressure. The air compressor is of conventional configuration, and typically comprises a centrifugal compressor.

Downstream of the compressor 23 is a heat recovery unit in the form of the first heat exchanger 24. The first heat exchanger 24 comprises first passages which carry compressed air, and second passages which carry a second working fluid in the form of a refrigerant, which does not consist of air. Typically, the refrigerant is carbon dioxide, though other refrigerants may be used. The air passage and refrigerant passage are in thermal contact, such that heat is transferred from the compressed air to the relatively cool refrigerant in operation.

An air turbine 25 is provided downstream in the bleed air flow of the first heat exchanger 24. The air turbine 25 is configured to expand the bleed air to provide rotary power. The air turbine 25 is coupled to the compressor 23 by a bleed air cycle machine shaft 26, such that rotation of the turbine 25 drives the compressor 23. It will be understood that the air cycle machine may be omitted. In such a case, the air from the inlet 21 would be transmitted directly to the heat exchanger 24.

A mixing valve 28 is provided downstream in bleed air flow of the turbine 25, and is configured to recombine bleed air flow that has passed through the air conditioning machine (i.e. the compressor 23, heat exchanger 24 and turbine 25), with air that has passed through the bypass line 27. Consequently, the temperature and pressure of the air can be adjusted by control of the valve 28.

Further downstream is a re-heater 29. The re-heater is also in the form of a heat exchanger, and is configured to exchange heat with bleed air further downstream in the cycle. The operation of this reheat will be described in further detail below. It will be understood that, in versions that omit the air cycle machine, the re-heater 29 would be directly downstream of the first heat exchanger 24.

A water extraction loop comprising a condenser 30 and a water extractor 31 are provided downstream of the reheater 29. These are configured to remove excess water from the bleed air to both dehumidify the air, and prevent condensation in downstream components.

The bleed air line once again passes through the reheater 29 downstream of the water extractor 31.

Downstream of the re-heater 29 is an air turbine 32. The air turbine 32 is similar to the air cycle machine turbine 25, and is again configured to expand the air within the air line to rotate the turbine 32. The air turbine 32 is coupled to a shaft 37 and also to a load in the form of an electrical generator 39. The air turbine 32 comprises an inlet which receives relatively low pressure, relatively low temperature air downstream of the re-heater 29. The turbine 32 also comprises a heater 41, which surrounds a turbine outlet and is configured to heat air within the air turbine 32. The heater 41 can optionally be supplied with warm air from an outlet of the air cycle machine compressor 23 via a bypass line 50. This warmed air prevents ice from building up within the turbine 32. Spent air is then returned to an inlet of the air cycle machine compressor 23 via a return line 51. Flow from the through the lines 50, 51 may be controlled by suitable valves.

Downstream of the air turbine 32 is a second heat exchanger 33. The second heat exchanger 33 is configured to exchange heat between air and refrigerant. However, in this case, the heat flows from the refrigerant to the air, for reasons that will be explained below.

The air once again passes through the condenser 30 to re-humidify the air, before it is passed to the cabin via an outlet 34. A further mixer valve 44 is provided, which allows a proportion of air to bypass the air conditioning machine, such that hot, high pressure air can be provided to the cabin if necessary.

The environmental control system further comprises a closed cycle refrigeration system. The closed cycle refrigeration system exchanges heat with the air to further cool the air.

The closed cycle refrigeration system comprises a refrigerant compressor 35 downstream in refrigerant flow of the first heat exchanger 24, and is configured to compress refrigerant that has been heated by the first heat exchanger 24. The refrigerant compressor 35 is driven by a refrigeration cycle shaft 37, which couples the air turbine 32 to the refrigerant compressor 35. Consequently, the refrigerant compressor 35 is driven by the air turbine 32.

The second heat exchanger 33 is provided downstream of the refrigerant compressor 35 in refrigerant flow, such that heat is exchanged between the air and refrigerant once more. As previously mentioned, heat is rejected from the refrigerant to the air in this second heat exchanger 33.

A further heat exchanger 38 is optionally provided downstream of the second heat exchanger 33, which is configured to exchange heat between the cooled (though still warmer than ambient) refrigerant and a cooling medium, such as aircraft fuel or ambient temperature airflow, such as fan air flow. Where the cooling medium is air, a water injection line 43 is optionally provided, which is configured to provide water to the ambient temperature air prior to entry to the further heat exchanger, to thereby cool the ambient air, and increase the heat exchange efficiency.

A refrigerant expander is provided downstream in refrigerant flow of the second heat exchanger 33. The expander is in the form of a throttle valve 36, and is configured to expand and thereby cool the compressed refrigerant.

The first heat exchanger 24 is then provided downstream of the throttle valve 36 in refrigerant flow, to thereby provide a closed loop.

In operation, the environmental control system operates as follows.

Air is introduced to the air inlet 21 from the compressor 13 of the gas turbine engine 10. The air is then directed through one or both of the bypass line 27 or the air conditioning machine compressor 23 via the switching valve 22. Air which is passed to the air compressor 23 is compressed, which increases both the temperature and the pressure of the bleed air. This air is then cooled a first time by exchanging heat with the refrigerant in the first heat exchanger 24, thereby reducing the temperature of the bleed air, and increasing the temperature of the refrigerant.

Following the air again, the air is then cooled and expanded by the air cycle machine turbine 25, which rotates to drive the air cycle machine compressor 23 via the shaft 26. This cooled, expanded air is then mixed with the bypassed air at valve 28, before being cooled by the reheater 29. The air then passes through the condenser 30 and water extractor 31, to remove water from the air.

The dehumidified air is then passed back through the re-heater 29 again, to re-warm the air. This re-warmed air is then passed to the air turbine 32, where the air is once again expanded, to reduce the pressure and temperature of the air, and to also drive the shaft 37, refrigerant compressor 35 and generator 39.

The cooled air is now passed to the second heat exchanger 33, which transfers heat from the refrigerant to the air, to thereby increase the temperature of the air, and reduce the temperature of the refrigerant.

This air is now passed through the condenser once more to re-humidify the air, before being passed to the cabin.

Turning now to the closed cycle refrigeration system, heat is input to the cycle at the first heat exchanger 24. In the case where the refrigerant is carbon dioxide, the temperatures and pressures within the system may be regulated such that the carbon dioxide is heated to a super critical or trans-critical state by the first heat exchanger 24, and may be maintained in the critical or trans-critical state throughout the closed cycle. It will be understood that carbon dioxide is generally regarded as being supercritical where the temperature is above 31.1 degrees Celsius, and 7.38 mega-pascals (MPa). Under these conditions, CO₂ will generally expand to fill its container in a similar manner to a gas, but will have a density similar to a liquid. In view of the supercritical state of the CO₂ throughout the cycle, the refrigerant generally does not undergo phase changes during compression, heating and expansion.

The heated refrigerant is then passed to the refrigerant compressor 35, where it is compressed, thereby raising both the temperature and pressure of the refrigerant. The compressed and heated refrigerant is then passed to the second heat exchanger 33, where the now hot refrigerant exchanges heat with the relatively cool bleed air in the second heat exchanger 33, such that the temperature of the refrigerant is lowered, and the temperature of the bleed air is raised. The cooled refrigerant is then passed to the further heat exchanger 38, where the refrigerant is cooled further.

The refrigerant then passes to the throttle valve 36, where the pressure of the refrigerant is reduced, thereby again, lowering its temperature, before the refrigerant is passed once again to the first heat exchanger, thereby closing the cycle.

Advantageously, the cycle of the present disclosure is more efficient than a conventional cycle because part of the excess bleed enthalpy is converted into mechanical work, instead of being completely rejected to the ram air. The closed refrigeration cycle acts as a heat pump, lifting part of the excess enthalpy of the bleed air to higher temperatures. The presence of the second heat exchanger 33 in the refrigeration cycle allows the air turbine 32 to extract the maximum work from the compressed air, and at the same time meet the required target temperature. Indeed, the air turbine 32 can operate with a discharge temperature much lower than in a conventional cycle (resulting in maximum power extraction), and recover the required outlet temperature using part of the heat discharged from the refrigeration cycle. The system has been modelled by the inventors based on typical temperatures and pressure delivery for a modern gas turbine engine, as well as typical cabin air demand in terms of pressure, mass flow and temperature. In models, efficiency gains approaching 1% of overall fuel burn have been achieved, for a relatively small increase in overall system weight, or in some cases a reduction is system weight. Aerodynamic drag is also decreased, since the further heat exchanger can be reduced in size or eliminated entirely.

In order to further illustrate the operation of this embodiment, the following table shows the pressure, (in kilo-Pascals), temperature (in degrees Celcius) and mass flow (in kilograms per second) at various points in the cycle in an example embodiment, which has been modelled by the inventors. It will be appreciated that these numbers are merely illustrative, and not limiting. The position of each point in the cycle is illustrated in figure 6, with air parameters being prefaced by the letter A, and refrigerant parameters being prefaced with the letter R.

**Table 1**

| Station | Pressure (kPa) | Temperature (°C) | Mass Flow (kg/s) |
|---|---|---|---|
| A1 | 241.3 | 200.0 | 1.016 |
| A5 | 241.3 | 200.0 | 1.016 |
| A6 | 311.2 | 241.3 | 1.016 |
| A9 | 301.9 | 53.8 | 1.016 |
| A10 | 171.5 | 11.6 | 1.016 |
| A12 | 171.5 | 11.6 | 1.016 |
| A13 | 166.4 | 10.0 | 1.016 |
| A14 | 161.4 | 6.1 | 1.016 |
| A16 | 161.4 | 6.1 | 1.016 |
| A17 | 156.5 | 7.8 | 1.016 |
| A18 | 87.1 | -29.7 | 1.016 |
| A19 | 85.4 | -2.9 | 1.016 |
| A20 | 82.8 | 1.0 | 1.016 |
| R21 | 7750.0 | 32.9 | 3.890 |
| R22 | 7700.0 | 57.2 | 3.890 |
| R23 | 11550.0 | 57.2 | 3.890 |
| R24 | 11550.0 | 55.5 | 3.890 |
| R25 | 11400.0 | 45.0 | 3.890 |
| A26 | 38.0 | -22.9 | 3.307 |
| A28 | 37.8 | 38.0 | 3.307 |

In this example, the power produced by the air turbine 32 is 39.65kW, and the power consumed by the refrigerant compressor 35 is 38.13kW. Consequently, in this example, net power of 1.52 kW is input to the generator 39 for the production of electrical power.

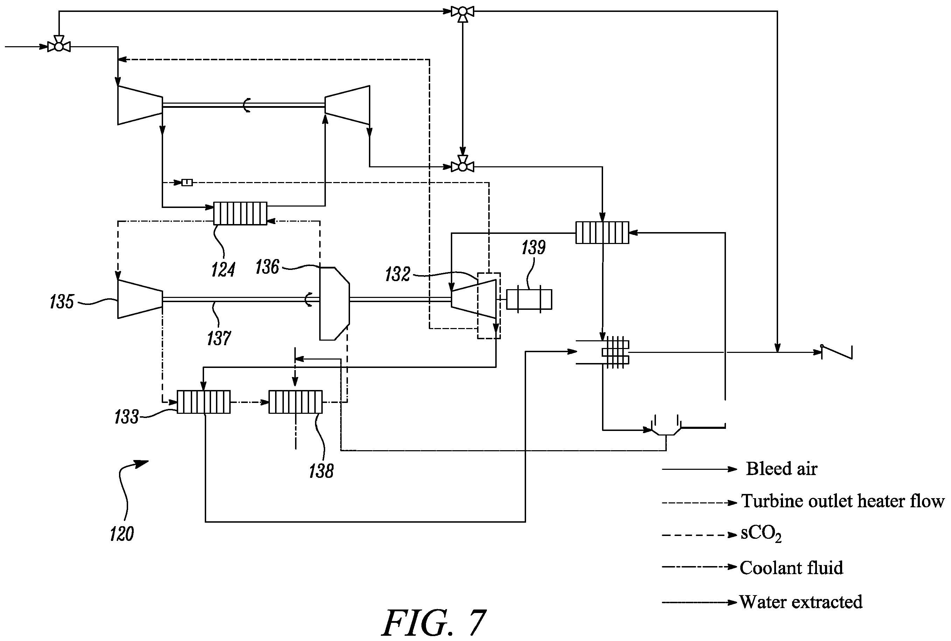

Figure 7 shows an alternative arrangement. Features having functions equivalent to those of the embodiment of figure 6 have equivalent reference numerals, incremented by 100. For the sake of brevity, only those features that differ from the first embodiment are described in detail.

The system includes a first heat exchanger 124, refrigerant compressor 135, second and further heat exchanger 133, 138, shaft 137 and air turbine 132 driving a further load 139, which are each similar to their equivalent components of the first embodiment. However, the throttle valve 36 is replaced by a refrigerant turbine 136. The refrigerant turbine is configured to expand the refrigerant cooled by the second and further heat exchangers 133, 138, and drive the shaft 137, such that the load on the air turbine required to drive the refrigerant compressor 135 is reduced. Consequently, efficiency of the refrigerant cycle is increased, and overall system efficiency is further increased, since more air turbine power is available to drive the further load 139. Optionally, the air turbine 132 and refrigerant turbine 136 may be coupled via a gearbox (not shown), which may reduce or increase the rotational speed of the turbine 132 relative to the turbine 136, in order to match their speeds in operation. In some cases, a gearbox having multiple ratios or a continuously variable ratio (CVT) gearbox may be used.

Other gas turbine engines to which the present disclosure may be applied may have alternative configurations. By way of example such engines may have an alternative number of interconnecting shafts (e.g. three) and/or an alternative number of compressors and/or turbines. Further the engine may comprise a gearbox provided in the drive train from a turbine to a compressor and/or fan.

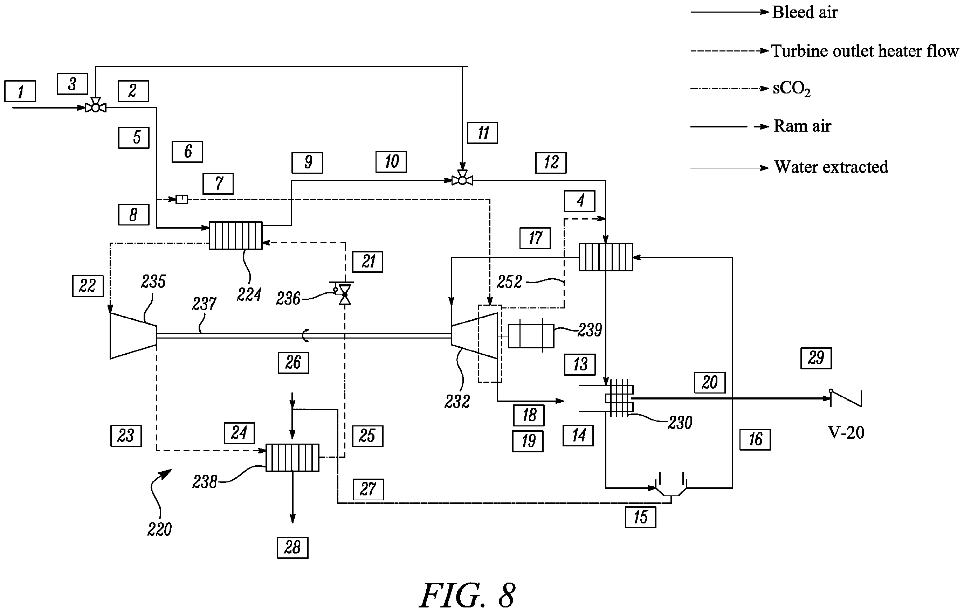

Figure 8 shows a further alternative arrangement. Again, features having functions equivalent to those of the embodiment of figure 6 have equivalent reference numerals, incremented by 200. For the sake of brevity, only those features that differ from the first embodiment are described in detail. This embodiment primarily differs from the previous embodiments, in that the refrigerant coolant is ambient ram air, rather than air provided downstream of the power air turbine.

Referring to figure 8, the system includes a first heat exchanger 224, refrigerant compressor 235, second heat exchanger 238, shaft 237, throttle valve 236, power air turbine heater 241 and air turbine 232 driving a further load 239, which are each similar to their equivalent components of the first embodiment. Again, the air cycle machine is omitted.

In this embodiment, the second heat exchanger is configured to exchange heat with ambient air in a similar manner to the third heat exchanger of the first embodiment. Consequently, no heat is exchanged between the air downstream of the air turbine 232. Instead, air flows from the air turbine 232 directly to the condenser 230, and then to the cabin. A further difference in this embodiment is the provision of a bleed offtake line 252, which bleeds off air to ambient downstream of the power air turbine heater 241.

In order to better illustrate the advantages of this embodiment, the below table 2 provides flow parameters at various points in the cycle in an example embodiment, which has been modelled by the inventors. It will be appreciated that these numbers are merely illustrative, and not limiting. The position of each point in the cycle is illustrated in figure 8, with air parameters being prefaced by the letter A, and refrigerant parameters being prefaced with the letter R.

**Table 2**

| Station | Pressure (kPa) | Temperature (°C) | Mass Flow (kg/s) |
|---|---|---|---|
| A1 | 241.3 | 200.0 | 1.016 |
| A5 | 241.3 | 200.0 | 0.975 |
| A6 | 241.3 | 200 | 0.975 |
| A9 | 228.3 | 56.5 | 0.975 |
| A10 | 228.3 | 56.5 | 0.975 |
| A12 | 228.3 | 62.3 | 1.016 |
| A13 | 221.5 | 52.8 | 1.016 |
| A14 | 214.8 | 30.7 | 1.016 |
| A16 | 214.8 | 30.7 | 1.016 |
| A17 | 208.4 | 40.2 | 1.016 |
| A18 | 85.4 | -21.2 | 1.016 |
| A19 | 85.4 | -21.2 | 1.016 |
| A20 | 82.8 | 1.0 | 1.016 |
| R21 | 7750.0 | 32.9 | 2.850 |
| R22 | 7700.0 | 33.8 | 2.850 |
| R23 | 11550.0 | 57.2 | 2.850 |
| R24 | 11550.0 | 57.2 | 2.850 |
| R25 | 11400.0 | 45.0 | 2.850 |
| A26 | 38.0 | -22.9 | 2.300 |
| A28 | 37.8 | 51.0 | 2.300 |

In this example, the power produced by the air turbine 232 is 62.43kW, and the power consumed by the refrigerant compressor 235 is 29.05kW. Consequently, in this example, net power of 33.39 kW is input to the generator 39 for the production of electrical power. As can be seen, more excess power is generated by this embodiment. However, it should be understood that the parameters of these systems have not been fully optimised. Consequently, further efficiency improvements of each of these systems may be realised.

Other refrigerants may be used, such as R12, R11, R134a, R410a, R744 or equivalents. In some cases, the heat exchangers may act as evaporators or condensers where these refrigerants are used. The electrical generator could be replaced with a different load, such as a pneumatic or hydraulic pump. Elements of the embodiments could be combined. For example, the throttle valve of the first embodiment could be replaced by the refrigerant turbine of the second embodiment.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. An aircraft environmental control system (20) comprising:
a first heat exchanger (24) configured to exchange heat between air provided by a pressurised air source (13), and a working fluid of a closed cycle refrigeration system;
an air turbine (32) configured to receive cooled air from the first heat exchanger (24); wherein the closed cycle refrigeration system comprises:
a closed cycle refrigeration system compressor (35) driven by the air turbine (32), a closed cycle refrigeration system expander (36), and a second heat exchanger (33) configured to exchange heat between working fluid of the closed cycle refrigeration system and a coolant;
and wherein
the air turbine drives a further load (39).

2. A system according to claim 1, wherein the environmental control system further comprises an air cycle machine comprising an air cycle machine compressor (23) coupled to an air cycle machine turbine (25) by an air cycle machine shaft (26).

3. A system according to claim 2, wherein the air cycle machine compressor (23) is configured to receive pressurised air from the pressurised air source, and is configured to air to the first heat exchanger (24).

4. A system according to claim 3, wherein the air cycle machine turbine (25) is configured to receive cooled bleed air downstream of the first heat exchanger (24), and is configured to deliver bleed air to the air turbine (32).

5. A system according to any of the preceding claims, wherein pressurised the air source comprises one or more of a main gas turbine engine core compressor (13), an electrically driven compressor (218), and a gas turbine engine shaft driven auxiliary compressor (118).

6. A system according to any of the preceding claims, wherein the working fluid of the closed cycle refrigeration system comprises carbon dioxide.

7. A system according to any of the preceding claims, wherein the closed cycle refrigeration system is configured such that the working fluid is heated to a critical or supercritical state by the first heat exchanger (24).

8. A system according to any of the preceding claims wherein the coolant comprises one of air provided from a ram air duct, and aircraft fuel.

9. A system according to any of claims 1 to 7, wherein the second heat exchanger (33) is configured to exchange heat between working fluid of the closed cycle refrigeration system and air downstream of the air turbine (32).

10. A system according to claim 9, wherein the closed cycle refrigeration system comprises a third heat exchanger (38) provided downstream in working fluid flow of the second heat exchanger, and configured to exchange heat between the closed cycle refrigeration system working fluid and a heat sink working fluid comprising one of air provided from a ram air duct, and aircraft fuel.

11. A system according to any of the preceding claims, wherein the further load driven by the air turbine comprises an electrical generator (39).

12. A system according to any of the preceding claims, wherein the closed cycle refrigeration system compressor (35) is provided downstream in working fluid flow of the first heat exchanger (24), the second heat exchanger (33) is provided downstream of the closed cycle refrigeration compressor (35), the expander (36) is provided downstream in working fluid flow of the second heat exchanger (33), and the first heat exchanger (24) provided downstream in working fluid flow of the expander (36) to form a closed cycle.

13. A system according to any of the preceding claims, wherein the expander comprises one of an expansion valve (36) and a closed cycle refrigeration turbine (136), wherein the closed cycle refrigeration turbine (136) may be configured to drive the closed cycle refrigeration cycle compressor (135).

14. A system according to claim 2 or any claim dependent thereon, wherein the environmental control system comprise a bypass passage (50) configured to bypass air from an output of the air cycle machine compressor (23) to an input of a heater (41) configured to heat air within the air turbine (32).

15. An aircraft (1) comprising a gas turbine engine (10) and an environmental control system (20) in accordance with any of the preceding claims, the gas turbine engine (10) being configured to provide a source of compressed air to the environmental control system (20).
